# EUROPEAN PATENT APPLICATION

(11) **EP 2 838 149 A1**
(43) Date of publication of application: **18.02.2015**
(21) Application number: 13776152.4
(22) Date of filing: 03.04.2013
(51) Int. Cl.: H01M 10/0567, H01M 2/16, H01M 4/505, H01M 4/525, H01M 4/587, H01M 10/052, H01M 10/0569

(54) **ORGANIC ELECTROLYTE AND ORGANIC ELECTROLYTE STORAGE CELL USING SAME**

(30) Priority: 11.04.2012 JP 2012090235
(71) Applicant: JX Nippon Oil & Energy Corporation, Chiyoda-ku Tokyo 100-8162 (JP)
(72) Inventor: NISHIZAWA, Takeshi, Tokyo 100-8162 (JP); OMARU, Atsuo, Tokyo 100-8162 (JP)
(74) Representative: Müller-Boré & Partner Patentanwälte PartG mbB
(86) International application number: PCT/JP2013/060158
(87) International publication number: WO 2013/153996

(57) **Abstract**

The present invention provides an organic electrolyte comprising a compound represented by formula (1) as a compound that can be used in organic electrolyte storage batteries with a high charge voltage of 4.7 V or higher (in formula 1, R₃ to R₁₆ are each independently hydrogen, a straight-chain or branched alkyl group having one to four carbon atoms, a halogen-containing straight-chain or branched alkyl group having one to four carbon atoms, halogen, a phenyl group having no substituent or having a substituent bonded thereto or a cyclohexyl group having no substituent or having a substituent bonded thereto, R₁ and R₂ are each independently hydrogen, a straight-chain or branched alkyl group having one to four carbon atoms or a halogen-containing straight-chain or branched alkyl group having one to four carbon atoms and R₃ to R₁₆ may bond to those next to each other to form a ring).

## Description

### Technical Field

The present invention relates to organic electrolytes and organic electrolyte storage batteries comprising the same.

### Background Art

Hybrid electric vehicles (HEV), plug-in hybrid electric vehicles (PHEV), battery electric vehicles (BEV) have been developed and commercialized from the viewpoint of environmental protection and energy saving. As the energy source of such electric vehicles, a large-scale secondary battery which is repeatedly chargeable and dischargeable is an essential technology. In particular, an organic electrolyte storage battery is a potent battery because it is higher in operating voltage and more likely to produce high power than the other secondary batteries containing a nickel-hydrogen cell and thus becomes increasingly important as the electric power source of an electric vehicle.

Generally, electrolyte solutions wherein a lithium salt is dissolved in a non-aqueous solvent such as a carbonic acid ester have been used in organic electrolyte storage batteries. Such a non-aqueous solvent has favorable properties in terms of battery characteristics because it is excellent in safety when it is used in a battery due to its high dielectric constant and high oxidation potential. Meanwhile, an organic electrolyte storage battery prepared using the electrolyte solution has risks of deforming, generating heat and sometimes igniting or rapturing when overcharged. It is also known that cathode active materials such as lithium transition metal complex oxides used in organic electrolyte storage batteries become unstable due to lithium ions to be deinserted when overcharged and as the results initiate a rapid exothermic reaction with an electrolyte solution or cause the lithium metal to precipitate in the form of dendrite on the anode, creating a short-circuit.

A method has been proposed, in which an organic compound is added in an appropriate amount to the electrolyte so as to enhance the safety when an organic electrolyte storage battery is overcharged. Known as such an organic compound are compounds that form a high resistance coat on an active material surface by being oxidation-polymerized in an overcharge state, compounds that induce self-discharge or internal short-circuit by initiating repeatedly an oxidation reduction reaction in an overcharged state, and compounds that allow an internal pressure operating electrical shutoff valve to actuate upon gas generation in an overcharge state (for example, Patent Literatures 1 to 4).

### Citation List

### Patent Literature

Patent Literature 1: Japanese Patent Application Laid-Open Publication No. 9-106835
Patent Literature 2: Japanese Patent Application Laid-Open Publication No. 9-171840
Patent Literature 3: Japanese Patent Application Laid-Open Publication No. 11-162512
Patent Literature 4: Japanese Patent Application Laid-Open Publication 2004-30991

### Summary of Invention

### Technical Problem

However, since the conventional organic compounds are adopted to organic secondary batteries with a maximum charge voltage of about 4.2 to 4. 4 V and cause a reaction such as the above-described oxidation polymerization at about 4.7 V or lower, they cannot be used for a battery charged at a voltage higher than that.

The present invention has an object to provide a compound that can be used in organic electrolyte storage batteries with a high charge voltage of 4.7 V or higher.

### Solution to Problem

As the results of extensive studies by the inventors of the present invention to achieve the above object, the present invention has been accomplished on the basis of the finding that a compound represented by formula (1) below contained in an electrolyte could be used secondary batteries with a high charge voltage.

That is, the present invention relates to an organic electrolyte comprising a compound represented by formula (1) below: 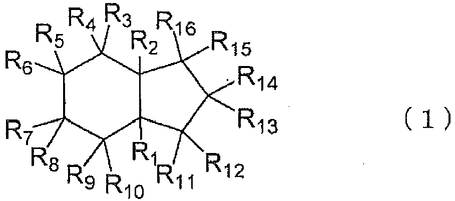 wherein R₃ to R₁₆ are each independently hydrogen, a straight-chain or branched alkyl group having one to four carbon atoms, a halogen-containing straight-chain or branched alkyl group having one to four carbon atoms, halogen, a phenyl group having no substituent or having a substituent bonded thereto or a cyclohexyl group having no substituent or having a substituent bonded thereto, R₁ and R₂ are each independently hydrogen, a straight-chain or branched alkyl group having one to four carbon atoms or a halogen-containing straight-chain or branched alkyl group having one to four carbon atoms and R₃ to R₁₆ may bond to those next to each other to form a ring.

The present invention also relates to an organic electrolyte storage battery comprising the above-described organic electrolyte.

### Advantageous Effect of Invention

An organic electrolyte storage battery with a high charge voltage of 4.7 V or higher can be produced by including a compound represented by formula (1) in an organic electrolyte.

### Brief Description of Drawings

Figure 1 is a schematic sectional view showing a coin type organic electrolyte storage battery.
Figure 2 is a graph showing the charge curves of Example 1 and Comparative Examples 1 and 2.

### Description of Embodiments

The present invention will be described in more detail below.

The present invention relates to an organic electrolyte comprising a compound represented by formula (1) below:

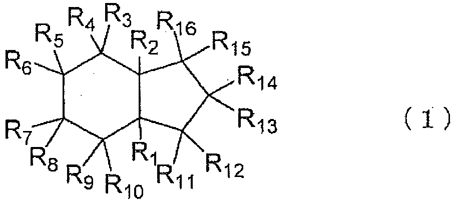

In formula (1), R₃ to R₁₆ are each independently hydrogen, a straight-chain or branched alkyl group having one to four carbon atoms, a halogen-containing straight-chain or branched alkyl group having one to four carbon atoms, halogen, a phenyl group having no substituent or having a substituent bonded thereto or a cyclohexyl group having no substituent or having a substituent bonded thereto, R₁ and R₂ are each independently hydrogen, a straight-chain or branched alkyl group having one to four carbon atoms or a halogen-containing straight-chain or branched alkyl group having one to four carbon atoms. The compound of formula (1) will be a cis-isomer or a trans-isomer depending on whether R₁ and R₂ are oriented in the same or different direction with respect to the ring. R₃ to R₁₆ may bond to those next to each other to form a ring.

Examples of the compound represented by formula (1) include trans-hydrindane, cis-hydrindane, 1-fluorohydrindane, 1,4-difluorohydrindane and 1-cyclohexylhydrindane.

The blend ratio of the compound represented by formula (1) is preferably 0. 5 percent by mass or more, more preferably 1 percent by mass or more in the organic electrolyte. The upper limit is preferably 20 percent by mass or less, more preferably 10 percent by mass or less, more preferably 5 percent by mass or less. If the blend ratio of the compound represented by formula (1) is less than 0.5 percent by mass, the advantageous effects of the present invention may not be attained. Whilst, if the blend ratio is more than 20 percent by mass, the electrolyte salt would be reduced in solubility or the organic electrolyte would be increased in viscosity, possibly causing deterioration in the performances of the secondary battery.

The purity of the compound represented by formula (1) is preferably 95% or higher, more preferably 98% or higher, more preferably 99% or higher. If the purity is lower than 95%, impurities that inhibit the advantageous effects of the present invention can be contained.

The organic electrolyte is composed of mainly an organic solvent and an electrolyte salt, and the organic solvent may be a high-dielectric solvent and a low viscosity solvent.

The content ratio of high-dielectric solvent in the organic electrolyte is preferably from 5 to 45 percent by volume, more preferably from 10 to 40 percent by volume, more preferably from 15 to 38 percent by volume.

The content ratio of the low viscosity solvent in the organic solvent in the organic electrolyte is preferably from 55 to 95 percent by volume, more preferably from 60 to 90 percent by volume, more preferably 62 to 85 percent by volume.

Examples of the above-described high-dielectric solvent include ethylene carbonate, propylene carbonate, butylene carbonate, γ-butyrolactone, γ-valerolactone, tetrahydrofuran, 1,4-dioxane, N-metyl-2-pyrrolidone, N-methyl-2-oxazolidinone, sulfolane, and 2-methylsulforane.

Examples of the low viscosity solvent include dimethyl carbonate, diethyl carbonate, ethylmethyl carbonate, methylpropyl carbonate, methylisopropyl carbonate, ethylpropyl carbonate, dipropyl carbonate, methylbutyl carbonate, dibutyl carbonate, dimethoxyethane, methyl acetate, ethyl acetate, propyl acetate, isopropyl acetate, butyl acetate, isobutyl acetate, methyl propionate, ethyl propionate, methyl formate, ethyl formate, methyl butyrate, and methyl isobutyrate.

Examples of the electrolyte salt include inorganic lithium salts such as lithium hexafluorophosphate (LiPF₆), lithium tetrafluoroborate (LiBF₄), lithium hexafluoroarsenate (LiAsF₆), lithium hexafluoroantimonate (LiSbF₆), lithium perchlorate (LiClO₄) and lithium tetrachloroaluminate (LiAlCl₄), and lithium salts of perfluoroalkane sulfonic acid derivatives such as lithium trifluoromethanesulfonate (CF₃SO₃Li), lithium bis (trifluoromethanesulfone) imide [(CF₃SO₂)₂NLi], lithium bis(pentafluoroethanesulfone)imide [(C₂F₅SO₂)₂NLi] and lithium tris (trifluoromethanesulfone)methide [(CF₃SO₂) ₃CLi]. The electrolyte salts may be used alone or in combination.

The electrolyte salt is usually contained in a concentration of 0.5 to 3 mol/L, preferably 0.8 to 2 mol/L, more preferably 1.0 to 1. 6 mol/L in the organic electrolyte.

The present invention also provides an organic electrolyte storage battery produced using an organic electrolyte comprising a compound represented by formula (1).

For the organic electrolyte storage battery of the present invention, the cathode active material may be any material that can store and release lithium. For example, the cathode active material may be a lithium-containing complex oxide LiMO₂ (M is only one type or a mixture of two or more types selected from metals such as Mn, Fe, Co, and Ni, and may be partially substituted by other cations such as Mg, Al, or Ti), LiMn₂O₄, LiMn_{0.5}Ni_{1.5}O₄, or an olivine type material as typified by LiFePO₄ or LiMnPO₄. Other than these, a lithium-rich material such as Li₂MnO₃ or Li₂MSiO₄ (M is metal) may be used.

The cathode comprises preferably lithium and a transition metal, particularly preferably a layered oxide containing cobalt, nickel or manganese.

The anode may be an carbonaceous anode material containing an artificial graphite or natural graphite.

The anode active material may be an anode active material into which lithium is insertable or which is reactive with lithium. The anode active material is composed of mainly graphite but may be mixed with any of materials including carbon material such as amorphous carbon, a Li metal, a material forming an alloy with Li such as Si, Sn, or Al, a Si oxide, a Si complex oxide containing Si and metals other than Si, a Sn oxide, a Sn complex oxide containing Sn and metals other than Sn and Li₄Ti₅O₁₂.

The separator may be formed from an electrically insulative porous material, examples of which include polymer membranes or fibrous non-woven clothes that may be made of polyolefins such as polyethylene and polypropylene, polyester, polyethylene terephthalate, or polyimide. The materials may be used alone or in combination. Alternatively, the separator may be a single layer or a multi-layer (complex membrane). Alternatively, inorganic material nano particles of ceramic may be contained.

The both surfaces of the separator may be coated with a polymer compound such as polyvinylidene fluoride.

The organic electrolyte storage battery of the present invention may contain an electrolyte which turns into gel by inclusion of a polymer compound that swells due to the organic solvent and thus will be a retainer of the organic electrolyte. This is because a higher ion conductivity can be obtained by the polymer compound that swells due to the organic solvent thereby obtaining an excellent charge and discharge efficiency and preventing the liquid leakage from the battery. When the organic electrolyte contains such a polymer compound, the content thereof is preferably set in the range of 0.1 percent by mass or more to 10 percent by mass or less.

When a separator with the both surfaces coated with a polymer compound such as polyvinylidene fluoride is used, the mass ratio of the organic electrolyte and the polymer compound is preferably in the range of 50:1 to 10:1. With this range, a higher charge and discharge efficiency can be obtained.

Examples of the above-mentioned polymer compound include ether-based polymer compounds such as polyvinyl formal, polyethylene oxide and cross-linked bodies containing polyethylene oxide, ester-based polymer compounds such as polymethacrylate, acrylic polymer compounds, polyvinylidene fluoride, and polymers of vinylidene fluoride such as copolymers of vinylidene fluoride and hexafluoropropylene. The polymer compounds may be used alone or in combination. In particular, fluorine polymer compounds such as polyvinylidene fluoride is desirously used from the viewpoint of an effect to prevent swelling during storage at high temperatures.

### Examples

The present invention will be described in more detail with the following examples and comparative examples but is not limited thereto.

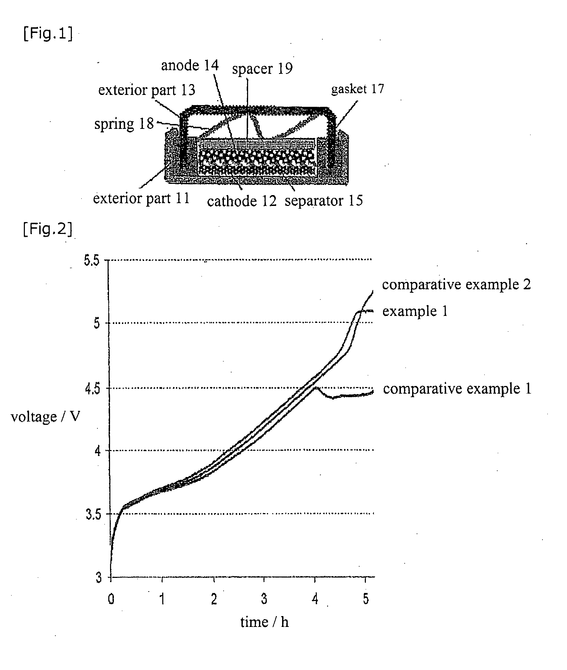

Herein, referring to Figure 1, a coin type organic electrolyte storage battery will be described, but the organic electrolyte storage battery of the present invention is not limited to the use in such a coin type battery, and is applicable to for example, an organic electrolyte storage battery of button type, pouch type, prismatic type, or a cylindrical type with a spiral structure. The size of the organic electrolyte storage battery is also optional, and thus it can be large, small or thin.

### (Example 1 to 12)

Figure 1 is a schematic sectional view showing the structure of a coin type organic electrolyte storage battery. This battery comprises a cathode 12 and an anode 14, laminated via a separator 15. The cathode 12, anode 14 and separator 15 each have a disc-like shape and accommodated in a space defined by metallic exterior parts 11 and 13. The interior defined by the exterior parts 11, 13 is filled with an organic electrolyte, and the periphery of the exterior parts 11, 13 is sealed by clumping a seal gasket 17. A metal spring 18 and a spacer 19 are disposed between the exterior part 13 and the anode 14.

The cathode was produced in the following manner.

An active material: LiNi_{1/3}Mn_{1/3}CO_{1/3}O₂ 91 percent by mass, a conductive agent: acetylene black 6 percent by mass, and a binder: poly(vinylidene fluoride) (hereinafter abbreviated to "PVDF") 3 percent by mass were mixed and to the mixture was added 3 percent by mass of N-methylpyrrolidone (hereinafter abbreviated to "NMP"), followed by kneading thereby producing a slurry. The resulting slurry was put dropwise on an aluminum current collector, and then formed into film with a film applicator with a micrometer and a machine coater and dried in an oven at a temperature of 110°C, under a nitrogen atmosphere. The resulting cathode was punched out into a circular shape with a diameter of 15 mm and then pressed. The cathode active material had a mass of about 23 mg.

The anode was produced in the following manner.

An active material: artificial graphite 94 percent by mass, a conductive agent: acetylene black 1 percent by mass, and a binder: PVDF 5 percent by mass were mixed, and to the mixture was added NMP, followed by kneading thereby producing a slurry. The resulting slurry was put dropwise on a copper current collector, and then formed into film with a film applicator with a micrometer and a machine coater and dried in an oven at a temperature of 110°C, under a nitrogen atmosphere. The resulting anode is punched out into a circular shape with a diameter of 15 mm and then pressed. The anode active material had a mass of about 19 mg.

Coin type secondary batteries were produced using the cathode and anode produced above, a polypropylene-made separator punched out into a circular shape with a thickness of 25 micrometers and various organic electrolytes prepared as described above. Ethylene carbonate (hereinafter abbreviated to EC) that is a high-dielectric solvent and dimethyl carbonate (hereinafter abbreviated to DMC) that is a low viscosity solvent were used as an organic solvent, and were mixed at a volume ratio of 3:7 to produce a solvent in which LiPF₆ was dissolved at 1 mol/L. As set forth in Table 1 below, compounds were mixed to prepare organic electrolytes. The purity of each of the compounds was 99% or higher.

**[Table 1]**

| | Compound (mass mix ratio) | Amount (wt%) |
|---|---|---|
| Example 1 | trans-hydrindane | 5 |
| Example 2 | trans-hydrindane (80), cis-hydrindane (20) | 5 |
| Example 3 | trans-hydrindane (50), cis-hydrindane (50) | 5 |
| Example 4 | trans-hydrindane | 2 |
| Example 5 | trans-hydrindane (80), cis-hydrindane (20) | 2 |
| Example 6 | trans-hydrindane (50), cis-hydrindane (50) | 2 |
| Example 7 | trans-hydrindane | 1 |
| Example 8 | trans-hydrindane (80), cis-hydrindane (20) | 1 |
| Example 9 | trans-hydrindane (50), cis-hydrindane (50) | 1 |
| Example 10 | trans-hydrindane | 0.5 |
| Example 11 | trans-hydrindane (80), cis-hydrindane (20) | 0.5 |
| Example 12 | trans-hydrindane (50), cis-hydrindane (50) | 0.5 |

The coin type secondary batteries produced above were each placed in a thermostat bath kept at 25°C and then subjected to a charge and discharge test. Each of the secondary batteries was charged at a constant electric current of 1.13 mA until the battery voltage reached 4.70 V and then charged at a constant voltage of 4.70 V for 10 hours. Thereafter, the battery was discharged at a constant electric current of 1.13 mA until the battery voltage reached 3.00 V.

Tale 2 sets forth the initial charge capacity, initial discharge capacity and initial charge and discharge efficiency(=initial discharge capacity/initial charge capacity x 100).

### (Comparative Example 1)

A coin type secondary battery where cyclohexylbenzene (purity 99% or higher) was added in an amount of 5 percent by mass on the basis of the organic electrolyte was prepared and evaluated in the same manner of Example 1. Table 2 sets forth the initial charge capacity (=initial discharge capacity/initial charge capacity x 100), initial discharge capacity and initial charge and discharge efficiency.

### (Comparative Example 2)

A coin type secondary battery containing none of the compounds was prepared and evaluated in the same manner of Example 1. Table 2 sets forth the initial charge capacity (=initial discharge capacity/initial charge capacity x 100), initial discharge capacity and initial charge and discharge efficiency.

**[Table 2]**

| | Initial charge capacity (mAh) | Initial discharge capacity (mAh) | Initial charge discharge efficiency (%) |
|---|---|---|---|
| Example 1 | 5.660 | 4.600 | 81.27% |
| Example 2 | 5.658 | 4.611 | 81.50% |
| Example 3 | 5.657 | 4.607 | 81.44% |
| Example 4 | 5.652 | 4.583 | 81.09% |
| Example 5 | 5.653 | 4.604 | 81.44% |
| Example 6 | 5.651 | 4.598 | 81.37% |
| Example 7 | 5.645 | 4.575 | 81.05% |
| Example 8 | 5.642 | 4.586 | 81.28% |
| Example 9 | 5.640 | 4.581 | 81.22% |
| Example 10 | 5.614 | 4.538 | 80.83% |
| Example 11 | 5.611 | 4.547 | 81.04% |
| Example 12 | 5.609 | 4.544 | 81.01% |
| Comparative Example 1 | 5.290 | 0 | 0% |
| Comparative Example2 | 5.590 | 4.510 | 80.68% |

The batteries containing compounds represented by formula (1) according to the present invention were found to obtain initial properties equivalent to those of the battery containing no compound (Comparative Example 2) and to give no adverse effect on the batteries even charged at 4.7 V and thus to be used without any problem. Furthermore, it was also confirmed that the more the compounds, the better the initial charge and discharge efficiency. Whereas, it becomes apparent that the battery containing cyclohexylbenzene (Comparative Example 1) obtained no discharge capacity and thus could not be used at 4.7 V.

The coin type secondary batteries of Examples 1 to 4, 7 and 10 and Comparative Examples 1 and 2 were each placed in a thermostat bath kept at room temperature and charged at a constant electric current of 1.13 mA until the compounds reacted and the battery voltage became constant. The values when the voltage became constant are set forth in Table 3. Figure 2 shows the charge curves of Example 1 and Comparative Examples 1 and 2.

**[Table 3]**

| | Voltage (V) |
|---|---|
| Example 1 | 5.10 |
| Example 2 | 5.08 |
| Example 3 | 5.08 |
| Example 4 | 5.11 |
| Example 7 | 5.12 |
| Example 10 | 5.14 |
| Comparative Example 1 | 4.46 |
| Comparative Example 2 | none |

The batteries containing compounds represented by formula (1) according to the present invention (Examples) and the battery containing cyclohexylbenzene (Comparative Example 1) had a constant voltage at 5.08 V or higher and 4.46 V, respectively and thus it is assumed that at these voltages, some reaction occurred. Whereas, the battery containing none of the compounds (Comparative Example 2) did not have a constant voltage for the same charging time. Therefore, the compounds according to the present invention and cyclohexylbenzene were found to have an effect of suppressing the voltage increase when overcharged.

It becomes apparent from the above results that the compounds represented by formula (1) used in the present invention can be used in an organic secondary battery with a high charge voltage of 4.7 V or higher and enhance safety when the battery was overcharged.

### Industrial Applicability

The organic electrolyte of the present invention can be used in a secondary battery with a high charge voltage and contributes to the practical use of a secondary battery having a high charge voltage, i.e., high energy density.

## Claims

1. An organic electrolyte comprising a compound represented by formula (1) below: 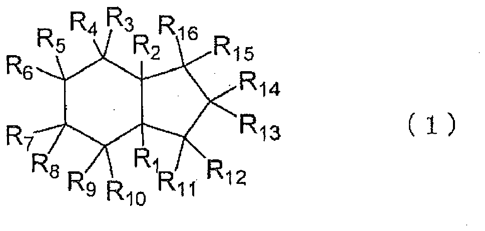 wherein R₃ to R₁₆ are each independently hydrogen, a straight-chain or branched alkyl group having one to four carbon atoms, a halogen-containing straight-chain or branched alkyl group having one to four carbon atoms, halogen, a phenyl group having no substituent or having a substituent bonded thereto or a cyclohexyl group having no substituent or having a substituent bonded thereto, R₁ and R₂ are each independently hydrogen, a straight-chain or branched alkyl group having one to four carbon atoms or a halogen-containing straight-chain or branched alkyl group having one to four carbon atoms and R₃ to R₁₆ may bond to those next to each other to form a ring.

2. The organic electrolyte according to claim 1 wherein the compound represented by formula (1) is contained in an amount of 0.5 to 20 percent by mass in the organic electrolyte.

3. The organic electrolyte according to claim 1 or 2 wherein it comprises an organic solvent containing a high-dielectric solvent in an amount of 5 to 45 percent by volume.

4. An organic electrolyte storage battery comprising the organic electrolyte according to any one of claims 1 to 3.

5. The organic electrolyte storage battery according to claim 4 wherein a separator comprising polypropylene is used.

6. The organic electrolyte storage battery according to claim 4 or 5 wherein an anode active material into which lithium is insertable or which is reactive with lithium is used.

7. The organic electrolyte storage battery according to any one of claims 4 to 6 wherein a carbonaceous anode material is used.

8. The organic electrolyte storage battery according to any one of claims 4 to 7 wherein the anode contains artificial graphite.

9. The organic electrolyte storage battery according to any one of claims 4 to 8 wherein the cathode comprises lithium and a transition metal.

10. The organic electrolyte storage battery according to any one of claims 4 to 9 wherein the cathode comprises a layered oxide containing cobalt.

11. The organic electrolyte storage battery according to any one of claims 4 to 10 wherein the cathode comprises a layered oxide containing nickel.

12. The organic electrolyte storage battery according to any one of claims 4 to 11 wherein the cathode comprises a layered oxide containing manganese.

13. The organic electrolyte storage battery according to any one of claims 4 to 12 wherein the maximum charge voltage is 4.7 V or higher.
